# EUROPÄISCHE PATENTANMELDUNG

(11) **EP 0 952 110 A1**
(43) Veröffentlichungstag der Anmeldung: **27.10.1999**
(21) Anmeldenummer: 99100468.0
(22) Anmeldetag: 12.01.1999
(51) Int. Cl.: C01B 31/02, C07C 39/17

(54) **Verfahren zur Trennung von Fullerenen mittels Chromatographie**

(30) Priorität: 21.04.1998 DE 19817774
(71) Anmelder: Menyes, Ulf, Dr., 17489 Greifswald (DE); Roth, Ulrich, Dr., 17498 Levenhagen (DE)
(72) Erfinder: Menyes, Ulf, Dr., 17489 Greifswald (DE); Roth, Ulrich, Dr., 17498 Levenhagen (DE)
(74) Vertreter: Meyerhöfer, Dietmar, Dipl.-Ing.

(57) **Zusammenfassung**

Die Erfindung betrifft ein effektives Verfahren zur Trennung von substituierten und / oder unsubstituierten Fullerenen mittels chromatografischer Trennmethode. Das wird dadurch erreicht, daß erfindungsgemäß zur Trennung der Fullerene calixarenmodifizierte stationäre Trennphasen bei vorzugsweise flüssigkeitschromatographischen Trennmethoden zur Anwendung kommen. Die calixarenmodifizierten stationären Trennphasen sind dadurch gekennzeichnet, daß ein oder mehrere Calixarene über eine chemische Bindung mit dieser fest verknüpft sind.

## Beschreibung

Die Erfindung betrifft ein Verfahren zur Trennung von substituierten und / oder unsubstituierten Fullerenen mittels der Chromatographie.

Da Fullerene in Katalysatoren eingesetzt werden, ist die Trennung des einzelnen Fullerenmoleküls aus dem Gemisch von großer Bedeutung. Weiterhin besteht aufgrund ihrer Struktur weltweit ein erhebliches Forschungsinteresse an den Fullerenen.

Yoshihiro, S.; Hatsuichi, O. et al.: Separation of Calixarenes with a chemically bonded silica stationary phase in microcolumn liquid chromatography; veröffentlicht in J. High Resolut. Chromatogr. (1996), 19(8), S. 475-477, und Kiyokatsu, J.; Kenji, T. et al. : Retention behavior of calixarenes with various C60 bonded silica phases in microcolumn liquid chromatography, veröffentlicht in: Anal. Commun. (1997), 34(6), S. 175-177, synthetisierten chemisch gebundene C60-Fulleren-Kieselgelphasen als stationäre Phasen für die Flüssigkeitschromatographie.

Durch Davydov, V. Ya., Felt, L. et al.: Immobilization of fullerene C60 on silica and properties of fullerene-silica adsorbens, veröffentlicht in Pro.-Electrochem. Soc. (1997), 97-14, S.567-579, ist ebenfalls stationäre Fulleren-Phasen beschrieben worden., wobei zunächst ein primäres Amin über Triethoxysilan an das Kiesgel geknüpft und dann das C60-Fulleren daran angebunden wird.

An den vorgenannnten Phasen erfolgt dann die Trennung von Caluxarenlösungen, wie beispielsweise 4-tert-butylcalix[4]arenes, 4-tert-butylcalix[6]arenes und 4-tert-butylcalix[8]arenes.

Durch Takeuchi, T.; Chu, J. und Miwa, T.: Separation of fulleren on ion-exchange-induced stationary phases in microcolumn liquid chromatography, veröffentlicht in: Analysis (1996) 24(7), S. 271-274, ist die Trennung von Fullerenen an mit Calixaren-Sulfonat modifizierten Ionenaustauscherharzen als stationäre Phase bekannt geworden. Allerdings wird bei diesem Verfahren das Calixaren an die Ionenaustauschermoleküle ionisch angelagert. Es existiert somit keine kovalente Bindung des Calixarens an die stionäre Phase.

Die Aufgabe der Erfindung besteht in einer effektiven Trennung von Fullerenen mittels Chromatographie.

Erfindungsgemäß wird die Aufgabe dadurch gelöst, daß calixarenmodifizierte stationäre Trennphasen zur Trennung der substituierten und / oder unsubstituierten Fullerene mittels vorzugsweise flüssigkeitschromatographischer Methoden zum Einsatz kommen. Hierzu werden die substituierten und / oder unsubstituierten Fullerene in einem geeigneten Lösungsmittel gelöst bzw. können Lösungen von Fullerenen in einem flüssigen Medium verwendet werden. Erfindungsgemäß ist die Trennphase dadurch gekennzeichnet, daß ein oder mehrere Calixarene über eine chemische Bindung mit dieser fest verknüpft sind.

Mit Hilfe eines geeigneten Laufmittels in Form von einem Lösungsmittel und / oder Lösungsmittelgemisch werden die Proben der gelösten Fullerene über die calixarenmodifizierte Trennphase geleitet, wobei sich die Fullerene räumlich voneinander trennen. Anschließend erfolgt dann die Detektion der getrennten Substanzen.

Die Erfindung soll an einem Ausführungsbeispiel näher erläuert werden.

### Beispiel 1:

Mittels einer HPLC-Anlage mit binärem Gradientensystem und UV-Detektor wird ein Gemisch aus C₆₀- und C₇₀-Fulleren mit einer Caltrex A III - Säule im Format 25 cm x 4,6 mm aufgetrennt. Als Elutionsmittel wird ein Gemisch aus Toluol / Methanol im Verhältnis von 4:6 (v/v) mit einer Fließgeschwindigkeit von 1 ml/min verwendet. Die Detektorwellenlänge beträgt 290 nm.

Folgendes Trennergebnis ist erzielt:

| Substanz | Zeit (min) |
|---|---|
| C₆₀-Fulleren | 11,6 |
| C₇₀-Fulleren | 16,3 |

Die erfindungsgemäße flüssigkeitschromatografische Trennmethode mit calixarenmodifizierten stationären Trennphasen ist in der Dünn- und Dickschichtchromatographie, Säulenchromatographie wie HPLC, Festphasenextraktion, überkritische Chromatographie wie beispielsweise SCE, Elektrophorese wie beispielsweise CE einsetzbar.

## Patentansprüche

1. Verfahren zur Trennung von Fullerenen mittels Chromatographie, dadurch gekennzeichnet, daß calixarenmodifizierte stationäre Trennphasen zur Anwendung kommen.

2. Verfahren zur Trennung von Fullerenen mittels Chromatographie nach Anspruch 1, dadurch gekennzeichnet, daß die calixarenmodifizierten Trennphasen vorzugsweise bei der Trennung der substituierten und / oder unsubstiuierten Fullerene mittels flüssigkeitschromatographischer Methoden anwendbar sind, wobei bei der Trennphase ein oder mehrere Calixarene über eine chemische Bindung mit dieser fest verknüpft sind.
